# EUROPÄISCHE PATENTSCHRIFT

(11) **EP 0 749 916 B1**
(45) Veröffentlichungstag und Bekanntmachung des Hinweises auf die Patenterteilung: **19.01.2000**
(21) Anmeldenummer: 96109929.8
(22) Anmeldetag: 20.06.1996
(51) Int. Cl.: B65G 1/10, B65G 49/06, A47B 53/02

(54) **Lageranlage mit einer Anzahl von geführten, durch eine Antriebsvorrichtung verfahrbaren Lagereinheiten**
Storage plant with guided storage units movable by means of a driving device
Installation de stockage à unités de stockage guidées, mues par un dispositif d'entraînement

(30) Priorität: 23.06.1995 DE 19522528
(43) Veröffentlichungstag der Anmeldung: 27.12.1996
(73) Patentinhaber: HEGLA Fahrzeug- u. Maschinenbau GmbH & Co. KG, D-37688 Beverungen (DE)
(72) Erfinder: Glaser, Siegfried, 37688 Beverungen (DE)
(74) Vertreter: Reichel, Wolfgang, Dipl.-Ing.

(56) Entgegenhaltungen:
- EP-A- 0 588 394
- WO-A-89/02712
- AT-B- 211 228
- DE-B- 2 117 922
- DE-U- 7 048 256
- SOVIET INVENTIONS ILLUSTRATED Section PQ, Week 8109 8.April 1981 Derwent Publications Ltd., London, GB; Class Q35, AN B8348 XP002015693 & SU-A-742 278 (ZHITOMIRSKII) , 25.Juni 1980
- SOVIET PATENT ABSTRACTS Section PQ, Week 8928 23.August 1989 Derwent Publications Ltd., London, GB; Class Q35, AN 89-204690 XP002015694 & SU-A-1 449 482 (BYKOV) , 7.Januar 1989

## Beschreibung

Die Erfindung betrifft eine Lageranlage mit einer Anzahl von geführten, durch eine Antriebsvorrichtung verfahrbaren Lagereinheiten nach dem Oberbegriff des Anspruchs 1.

Lageranlagen werden für die verschiedensten Zwecke eingesetzt, z.B. zur Aufbewahrung von Einzel- und Ersatzteilen oder von Schriftstücken. In der Regel können die einzelnen Lagereinheiten von Hand verschoben werden. Wenn aber das Gewicht der zu lagernden Gegenstände zu hoch ist, ist eine Verschiebung ohne mechanische Hilfe oder ohne eigene Antriebsvorrichtung nicht möglich.

Wenn als Antrieb ein motorischer Antrieb nicht erforderlich ist, kann ein Handantrieb vorgesehen sein, der über ein Getriebe und eine Kette sowie ein Kettenantriebsrad eine Verschiebung einzelner oder mehrerer Lagereinheiten ermöglicht.

Bei einem anderen System der eingangs erwähnten Art ist ein Motor als Antriebsvorrichtung vorgesehen, der in den verfahrbaren Lagereinheiten oder in einer feststehenden Lagereinheit der Anlage untergebracht ist. Dieser Motor setzt ein endloses Perlonseil in Bewegung, in das in die verfahrbaren Lagereinheiten der Lageranlage eingebaute Kupplungen eingreifen. Das Seil befindet sich in den für die Führung der verfahrbaren Lagereinheiten vorgesehenen Schienen, die in den Fußboden eingelassen sind. Gesteuert wird durch einen Handhebel an jeder der Lagereinheiten, in dessen Handgriff ein Schalter eingebaut ist, über den die jeweilige Kupplung betätigt und ein Stromkreis für den Motor eingeschaltet wird. Je nach Richtung, in die der Handhebel umgelegt wird, bewegt sich die Lagereinheit nach links oder rechts.

Bei diesem System sind pro Lagereinheit ein Handhebel vorgesehen, in dessen Handgriff ein Schalter zur Betätigung des Motors eingebaut ist. Dies bedingt eine aufwendige Verkabelung. Das umlaufende Seil ist Verschleiß ausgesetzt, ein gleichzeitiges Einkuppeln von mehreren Lagereinheiten läßt sich nicht durchführen. Zur Lagerung von schweren Glasplatten ist dieses bekannte System nur bedingt geeignet.

Um die Lagereinheiten einer Lageranlage für schwere Lasten, z.B. senkrecht gestapelte Glasplatten verfahren zu können, hat man schon Anlagen geschaffen, bei der jede Lagereinheit mit einem eigenen Motor ausgerüstet ist. Die Lagereinheiten können dann einzeln oder in Gruppen verfahren werden, um einen Durchgang zum Be- und Entladen zu Öffnen bzw. zu schließen. Eine solche Anlage ist jedoch wegen der für jede Lagereinheit vorgesehenen Motoren verhältnismäßig aufwendig. Die Motoren sind bei jeder Lagereinheit unten an den Fahrwerken angebracht, ragen dabei über die Fahrwerke in Verfahrrichtung hinaus und müssen aus Sicherheitsgründen bei Schaffung eines Durchganges abgedeckt werden. Dazu ist an jedem Fahrwerk eine schwenkbare Platte angebracht, durch die der betreffende Motor nach Bildung eines Durchgangs für das Be- und Entladen abgedeckt wird. Durch dieses Abdecken des Motors sind pro Entladevorgang nicht nur zwei zusätzliche Arbeitsschritte erforderlich, sondern es ist auch das Be- und Entladen der angrenzenden Lagereinheit erschwert, da der Motor auch wenn er abgedeckt ist beim Begehen oder Befahren des Durchgangs ein Hindernis darstellt.

Es ist schießlich eine Lageranlage der eingangs erwähnten Art nach der AT-PS 2 11 228 bekannt, bei der mehrere verfahrbare, auf Schienen laufende Lagereinheiten aneinander kuppelbar sind. Eine Antriebsvorrichtung treibt nur eine verfahrbare Lagereinheit an, die anderen Lagereinheiten können an diese angekuppelt werden. Die anderen Lagereinheiten können durch Verfahren der angetriebenen Lagereinheit verschoben, oder, sofern sie eingekuppelt sind, gezogen werden. Durch Zusammenschieben der Lagereinheiten läßt sich ein Lagergang schließen und durch Ziehen der aneinandergekuppelten Lagereinheiten läßt sich ein Lagergang an einer ausgewählten Stelle durch vorheriges Entkuppeln öffnen. Zur Kupplung zwischen jeweils zwei Lagereinheiten führt eine Steuereinrichtung. Es sind keine Vorkehrungen getroffen, um hochaufragende Lasten sicher zu handhaben.

Der Erfindung liegt die Aufgabe zugrunde, eine Lageranlage der eingangs erwähnten Art für schwere, hochaufragende Lasten zu schaffen, die bei geringem konstruktiven Aufwand eine einfache, sichere und zuverlässige Handhabung sowohl beim Öffnen und Schließen der Durchgänge als auch beim Be- und Entladen der Lagereinheiten gewährleistet.

Diese Aufgabe wird durch die Merkmale des kennzeichnenden Teils des Anspruchs 1 gelöst.

Mit der erfindungsgemäßen Lageranlage lassen sich hohe schwere Lasten sehr kompakt ohne Zwischenräume einlagern. Wesentliches Element sind dabei die Fahrwerke mit verschiedenen Spurbreiten, wobei das Fahrwerk mit der kleineren Spurbreite zwischen die Räder des Fahrwerks mit größerer Spurbreite verfahrbar ist. Eine solche Anordnung ermöglicht es, den Abstand zwischen den Aufbauten von Lagereinheiten erheblich zu verringern und gleichzeitig die Standsicherheit zu erhöhen.

Die geforderten Normwerte des Verhältnisses von Aufbauhöhe zu Achsenabstand lassen sich bei optimaler Ausnutzung des Lagerraums einhalten.

Vorteilhafte Weiterbildungen sind durch die Unteransprüche gegeben.

Auführungsformen der erfindungsgemäßen Lageranlage sind nachstehend anhand der Zeichnungen beispielshalber beschrieben. Dabei zeigen:
Fig. 1 eine Lageranlage mit verfahrbaren Lagereinheiten, in denen aufrecht leicht geneigt stehende Glasplatten gelagert sind, mit einem Durchgang in der Mitte der Anlage,
Fig. 2 die Lageranlage mit den verfahrbaren Lagereinheiten für aufrecht, leicht geneigt stehende Glasplatten, die der Ausführungform nach Figur 1 entspricht, wobei jedoch die Fahrwerke weggelassen sind, mit einem geöffneten Lagergang auf der rechen Seite der Anlage,
Fig. 3 eine verfahrbare Lagereinheit in A-Form mit keilförmig angeordneten Anlegeflächen,
Fig. 4 eine andere Ausführungsform einer verfahrbaren Lagereinheit in L-Form, wie sie bei der Lageranlage nach den Figuren 1 und 2 verwendet wird,
Fig. 5 eine weitere Ausführungsform der Lageranlage, bei der sich die angetriebene verfahrbare Lagereinheit in der Mitte befindet,
Fig. 6 den unteren Teil von L-förmigen Lagereinheiten mit Kupplungen zu deren Verbindung,
Fig. 7 den unteren Teil der Lagereinheiten nach Figur 5 mit entriegelter Kupplung,
Fig. 8 eine Seitenansicht von ineinander greifenden Fahrwerken, die auf nebeneinander liegenden Schienen verschiedener Spurbreite laufen,
Fig. 9 eine Ansicht der Fahrwerke nach Figur 7 von oben, wobei ihre Ausbildung für die verschiedenen Spurbreiten sowie das Ineinandergreifen der Fahrwerke erkennbar ist und
Fig. 10 eine Seitenansicht von zu Blöcken zusammengefahrenen Lagereinheiten mit aufgesetzter Last
Fig. 11 eine perspektivische Ansicht eines Aufbaus ineinandergreifender Fahrwerke nach Figuren 8 und 9.
Fig. 12 einen Spindelparallelantrieb für eine Lagereinheit zum parallelen Antrieb beider Fahrgestelle einer Lagereinheit,
Fig. 13 eine Seitenansicht dreier ineinander greifender Fahrwerke verschiedener Spurbreite, die auf nebeneinander liegenden Schienen dreier verschiedener Spurbreite laufen, und
Fig. 14 eine Ansicht der Fahrwerke nach Fig. 12 von oben, wobei ihre Ausbildung für die drei verschiedenen Spurbreiten sowie das Ineinandergreifen der Fahrwerke dreier verschiedener Spurbreiten erkennbar ist.

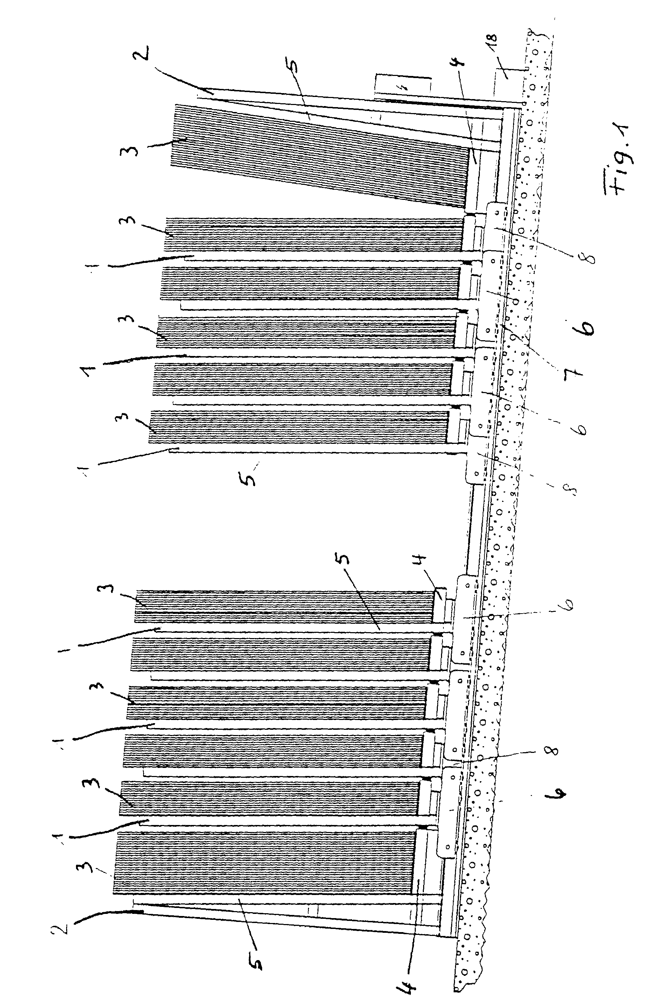

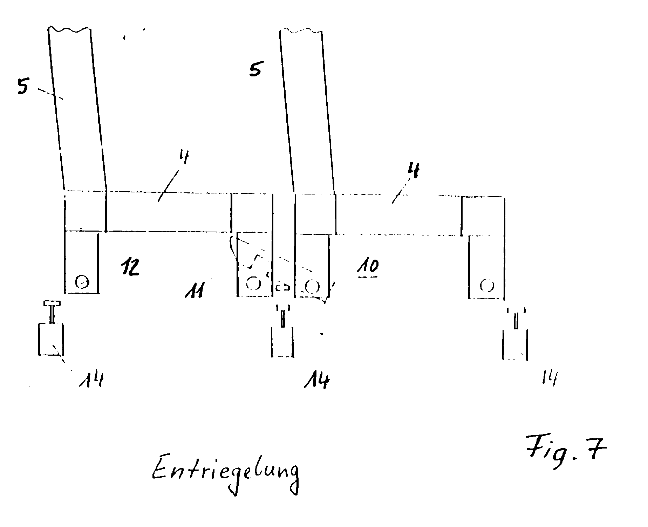

Die in Figur 1 dargestellte Lageranlage weist mehrere verfahrbare Lagereinheiten 1 und an ihren Enden feststehende Lagereinheiten 2 auf. In die Lagereinheiten 1 und 2 sind Glasplatten 3 eingestellt. Zu diesem Zweck weisen die Lagereinheiten 1 und 2 waagrechte Auflageflächen 4 und eine gegenüber der vertikalen leicht geneigte Anlagefläche 5 auf. Am unteren Ende jeder verfahrbaren Lagereinheit 1 befindet sich ein Fahrwerk 6 bzw. 8. Die Fahrwerke 6 sind in zwei parallele Schienen 7 größerer Spurbreite eingesetzt und die Fahrwerke 8 sind in zwei parallele Schienen einer kleinerer Spurbreite eingesetzt. Die Fahrwerke 8 sind entsprechend auch schmäler ausgebildet, so daß sie in die Fahrwerke 6 größerer Spurbreite eingreifen können. Im einzelnen wird das Prinzip der Verschachtelung der Fahrwerke noch anhand der Figuren 7 und 8 erläutert werden. Eine Verlängerung der Fahrwerke in Verfahrrichtung ermöglicht einen größeren Achsabstand der Fahrwerke, so daß die verfahrbaren Lagereinheiten 1 auch bei schräg gestellten hoch aufragenden Anlegeflächen 5 kipprrel bleiben und andererseits aufgrund der Verschachtelung der Fahrwerke eine äußerst raumsparende Lagerung von plattenförmigen Gegenständen möglich ist.

Die sich am rechten und linken Ende der Lageranlage befindenden feststehenden Lagereinheiten 2 weisen ebenso eine Auflagefläche 4 und eine gegenüber der vertikalen schräggestellte Anlegefläche 5 auf, gegen die einzulagernde Glasplatten 3 angelehnt sind. Die Neigungsrichtung der Anlagefläche 5 der rechten feststehenden Lagereinheit 2 ist entgegengesetzt zu der Neigungsrichtung der Anlagefläche 5 der verfahrbaren Lagereinheiten 1. Bei der dargestellten Ausführungsform ist an der feststehenden Lagereinheit 2 ein Motor 18 vorgesehen, mit dessen Hilfe die danebenliegende verfahrbare Lagereinheit 1 auf den Schienen von der feststehenden Lagereinheit 2 weggeschoben oder an diese herangeholt werden kann.

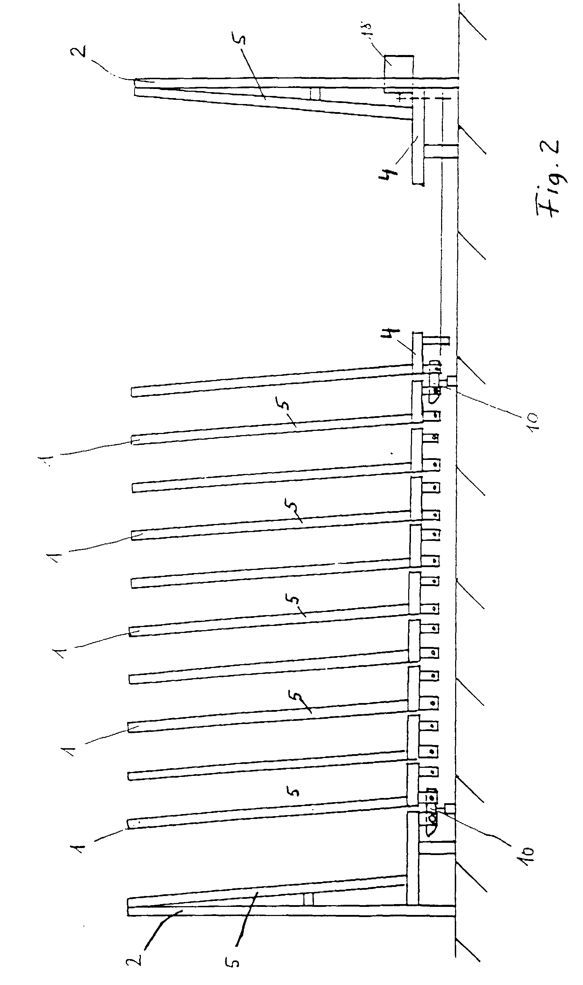

Die verfahrbaren Lagereinheiten 1 sind durch Kupplungen 10 miteinander verbindbar, die in Figur 2 erkennbar sind, da dort die Fahrwerke weggelassen sind. In Figur 2 sind die gleichen Teile der Lageranlage, die auch schon in Figur 1 dargestellt sind, mit den gleichen Bezugszeichen versehen. Wie bereits oben erwähnt, sind die Fahrwerke der Lagerregale 1 nicht dargestellt, damit die Kupplungen 10 bzw. deren Aufhängungen erkennbar sind.

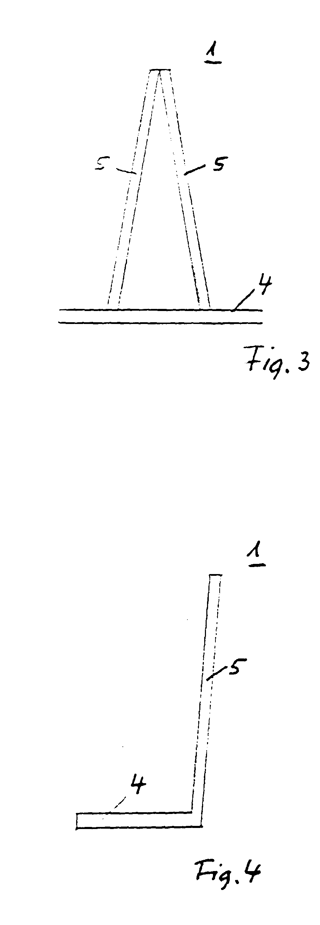

Bevor auf die Ausbildung der Kupplungen im einzelnen eingegangen wird, sei darauf hingewiesen, daß die Lagereinheiten 1 zum Lagern von Glasplatten in verschiedener Weise ausgebildet sein können, so wie es beispielsweise in den Figuren 3 und 4 dargestellt ist. Bei einem Aufbau der Lagereinheiten 1 nach Figur 3 mit A-förmig ausgebildeten Anlegeflächen werden Glasplatten von entgegengesetzten Seiten an die Lagereinheit 1 angelehnt. Bei dieser Ausführungsform der Lagereinheit hat die Auflagefläche in Verfahrrichtung eine derartige Abmessung, daß eine Verlängerung des Fahrwerks zur Erhöhung des Achsabstandes nicht erforderlich ist. Bei diesem Aufbau ist eine Kippsicherheit auch wegen der A-förmig aneinanderlehnenden Glasplatten von vornherein gegeben.

Bei dem Aufbau der Lagereinheiten 1 nach Figur 4 ist entweder eine Verlängerung des Fahrwerkes in Verfahrrichtung unabdingbar, damit der Schwerpunkt dieser Lagereinheit vor allem im beladenen Zustand nicht außerhalb der Achsen des Fahrwerkes liegt, oder es müssen Gegenrollen zu den Laufrollen der Fahrwerke unter die Schienen greifen, um ein Kippen der Lagereinheit in jedem Fall zu verhindern.

Die verfahrbaren Lagereinheiten 1 für die Glaslagerung können in weiteren Varianten in unterschiedlichster Form ausgebildet sein, sowohl was die Anlegeflächen betrifft als auch die Breite und Länge der Auflageflächen für das Glas. Die verfahrbaren Lagereinheiten nach Fig. 4 können in einer Regalanlage so angeordnet sein, daß die sich auf der linken Seite einer Anlage - in einer Ansicht nach Fig. 1 und 2 - befindenden Lagereinheiten 1 von rechts beladbar sind, während die sich auf der rechten Seite befindenden Lagereinheiten von links beladbar sind. Weitere Variationen sind möglich.

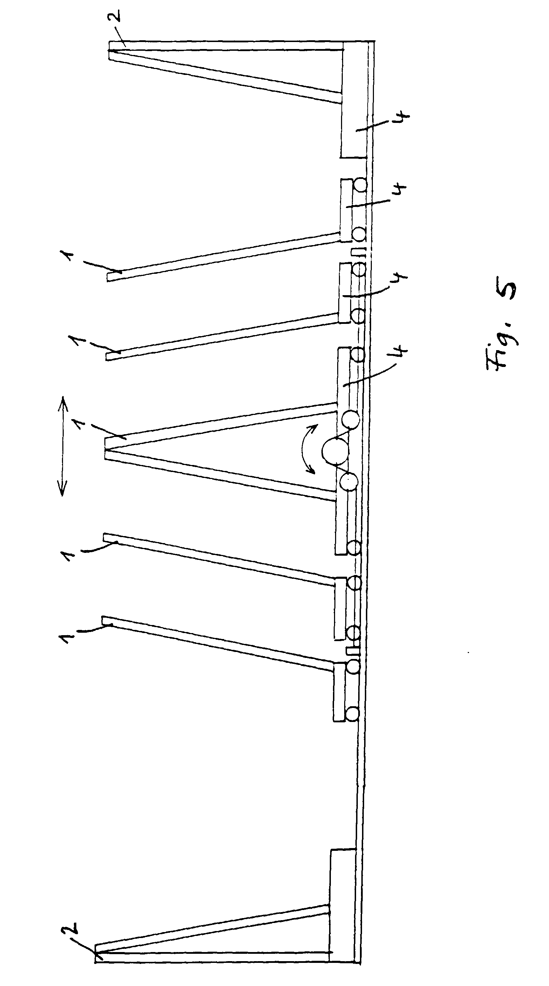

Eine andere Ausführungsform der Lageranlage, bei der sich eine verfahrbare angetriebene Lagereinheit 1 in der Mitte zwischen anderen verfahrbaren Lagereinheiten 1 auf ihrer rechten Seite und ihrer linken Seite befindet, ist in Fig. 5 dargestellt. Die verfahrbare angetriebene Lagereinheit ist dabei mit A-förmig ausgebildeten Anlageflächen 5 versehen, während die rechts bzw. links danebenliegenden verfahrbaren Lagereinheiten 1 eine L-förmige Ausbildung haben, wobei sich an ihre waagrechte Auflagefläche 4 eine gegenüber der Vertikalen geneigte Anlegefläche 5 anschließt. Die Neigung der Anlegefläche 5 ist bei den linken Lagereinheiten 1 entgegengerichtet zu der der rechten Lagereinheiten 1. Auf der rechten und der linken Seite sind feststehende Lagereinheiten 2 vorgesehen. Bei der Lageranlage nach Fig. 5 befinden sich die Lagereinheiten 1 in einer Stellung, daß auf der linken Seite zwischen der feststehenden Lagereinheit 2 und der danebenliegenden verschiebbaren Lagereinheit 1 ein Durchgang gebildet ist.

Andere Ausbildungsformen sind möglich bei denen die angetriebene verfahrbare Lagereinheit 1 auch nicht mittig zwischen den anderen verfahrbaren Lagereinheiten 1 angeordnet ist.

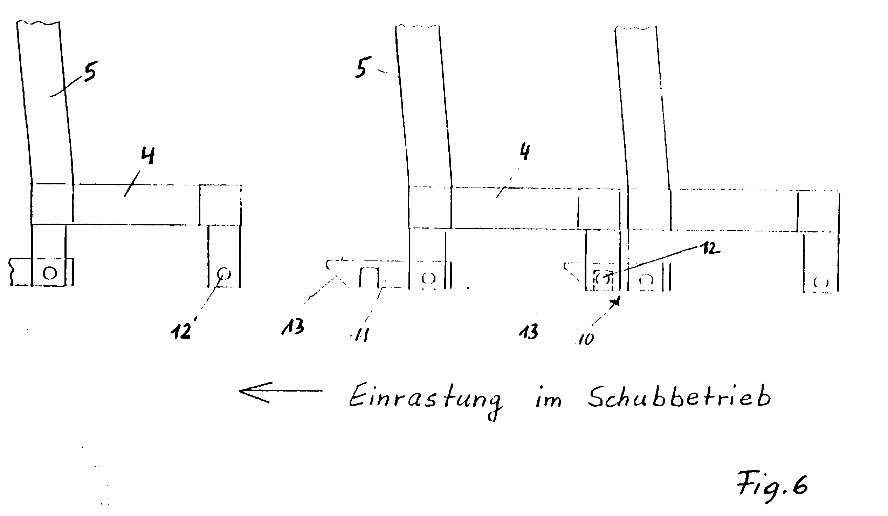

Eine Ausführungsform der Kupplungen 10 ist in den Figuren 6 und 7 dargestellt. Die Kupplungen 10 weisen einen einrastbaren Riegel 11 auf, der in eine Einraststange 12 eingreift, wie es in Figur 6 dargestellt ist. Die Riegel 11 haben an ihren freien Enden eine Auflauffläche 13, durch die sie beim Auflaufen auf die Einraststange 12 beim Zusammenschieben der verfahrbaren Lagereinheiten zu einem Schubblock angehoben werden bis schließlich ihre Nut 14 in die Einraststange 12 einrastet, wie dies in Figur 6 dargestellt ist.

In Figur 7 ist eine Kupplung 10 nach Figur 6 im entriegelten Zustand dargestellt. Unterhalb des Riegels - entweder in seiner Mitte oder an seinem freien freien Ende - befindet sich an der Lagereinheit oder auch innerhalb der Bodenfläche eine beispielsweise pneumatisch angetriebene Entriegelungsvorrichtung 14, durch die der Riegel 11 angehoben und damit die Kupplung 10 gelöst werden kann.

Dabei ist es besonders vorteilhaft, wenn sich die Entriegelungsvorrichtungen innerhalb der Bodenfläche unter den Lagereinheiten befinden und zwar vorzugsweise an festen Positionen im Abstand der Kupplungen, die die Lagereinheiten aneinanderkuppeln. Eine solche Anordnung der Entriegelungsvorrichtung 14 ist in Fig. 7 dargstellt, es sind aber auch solche Entriegelungsvorrichtungen in Fig. 2 unter der am weitesten rechts und links angeordneten Kupplung 10 dargestellt. Bei einer derartigen Anordnung ist es nicht notwendig zu den einzelnen verfahrbaren Lagereinheiten elektrische oder pneumatische Steuerleitungen zu führen; vielmehr werden die elektrischen oder pneumatischen Steuerleitungen in der Bodenfläche zu den an festen Positionen sich befindenden Entriegelungsvorrichtungen geführt.

Wenn bei einer solchen Ausbildung der Antrieb der verfahrbaren Lagereinheiten 1 mit Hilfe eines feststehenden Motors 18 erfolgt, wie z. B. in Fig. 2 dargestellt, müssen zu bewegbaren Einheiten keinerlei elektrische oder pneumatische Steuerleitungen geführt sein. Dies ist gegenüber den bekannten Anordnungen ein bedeutender Vorteil für den Aufbau und die Robustheit der Lageranlage und ihrer Bauteile.

Die in den Figuren 1 und 2 dargestellte Lageranlage wird in der Weise betrieben, daß die sich in Figur 1 auf der rechten Seite befindenden Lagereinheiten 1 zunächst in Richtung der auf der linken Seite der Lageranlage sich befindenden Lagereinheiten 1 verschoben werden, bis sie an diese ankuppeln. Der Zustand, bei dem alle Lagereinheiten nach links verschoben sind, ist in Figur 2 dargestellt. Zum Öffnen eines beliebigen Durchgangs zwischen zwei Lagereinheiten 1 wird die Kupplung 10 zwischen diesen Lagereinheiten z.B. pneumatisch gelöst und es wird dann der abgekuppelte Block der Lagereinheiten 1 mit Hilfe des Antriebs 18 nach rechts gezogen. Der links verbleibende Block der Lagereinheiten 1 bleibt an der linken feststehenden Lagereinheit 2 angekuppelt. Durch den neu gebildeten Durchgang kann die frei zugängliche Lagereinheit 1 nun entladen und beladen werden.

Befindet sich die Antriebsvorrichtung an einer verfahrbaren Lagereinheit inmitten der Lageranlage wie in Fig. 5 dargestellt, so kann beim Schließen eines Durchgangs gleichzeitig ein Durchgang auf der anderen Seite der angetriebenen Lagereinheit geöffnet werden. Dies reduziert die Zugriffszeit auf das zu lagernde Gut um die Hälfte. Ist jedoch ein Durchgang auf der Seite der angetriebenen Lagereinheit 1 zu öffnen, auf der schon ein Durchgang vorliegt, so ist der vorhandene Durchgang zunächst zu schließen und anschließend durch eine Bewegung in umgekehrter Richtung ein neuer Durchgang zu öffnen.

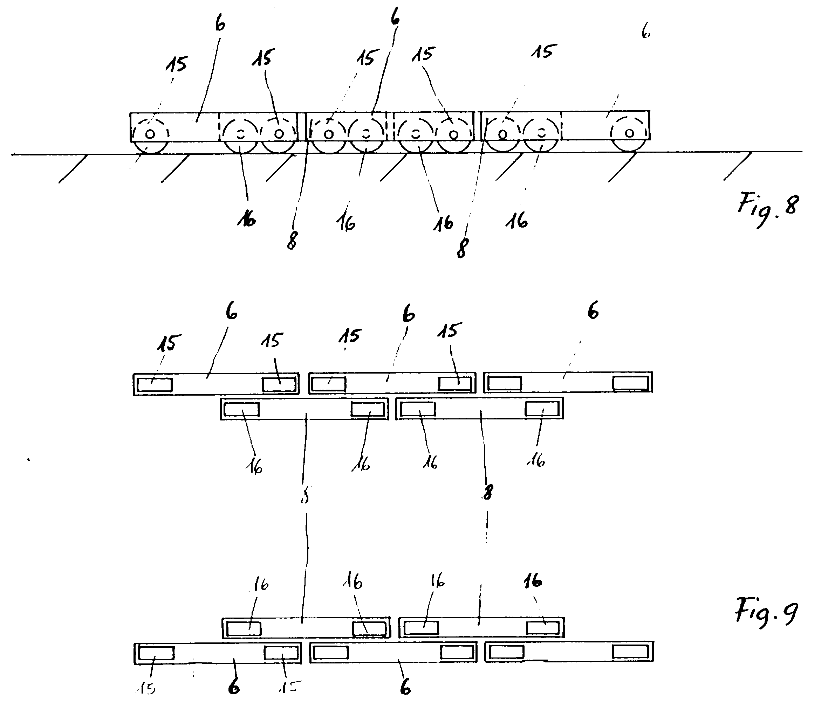

Bei Lagerregalen 1, wie sie in den Figuren 1, 2 und 4 dargestellt sind, bei denen die Anlegefläche 5 gegenüber der Vertikalen etwas geneigt ist, läßt sich ein Kippen des Lagerregals dadurch vermeiden, daß die Fahrwerke 6 bzw. 7 in Verfahrrichtung eine Abmessung aufweisen, so daß die Räder 15 bzw. 16 des Fahrwerks 6 bzw. 8 außerhalb des Schwerpunktes der Lagereinheit 1 liegen. Derartige Fahrwerke sind in den Figuren 8 und 9 dargestellt. Die Verlängerung des Achsstandes der Fahrwerke 6 und 8 ist auch in Figur 1 erkennbar. Damit die verfahrbaren Lagereinheiten 1 trotz Verlängerung der Fahrwerke dennoch bis auf einen möglichst geringen Abstand der Anlegeflächen 5 voneinander zusammengeschoben werden können, sind die Fahrwerke 6 in geringerer Breite ausgeführt als die Fahrwerke 8 und laufen auch auf Schienen einer geringerer Spurbreite. Dies ist anhand der Figur 9 gut erkennbar. Die Lagereinheiten 1 sind dabei abwechselnd mit einem Fahrwerk geringerer Spurbreite und einem Fahrwerk breiterer Spurbreite ausgerüstet. Die Fahrwerke können dann, wie es in Figur 9 dargestellt ist, ineinandergeschachtelt zusammengeschoben werden, wobei im zusammengeschobenen Zustand zwei Fahrwerke gleicher Spurbreite aneinander grenzen. Auf diese Weise läßt sich die Anzahl der Lagereinheiten pro Längeneinheit in Verfahrrichtung verdoppeln.

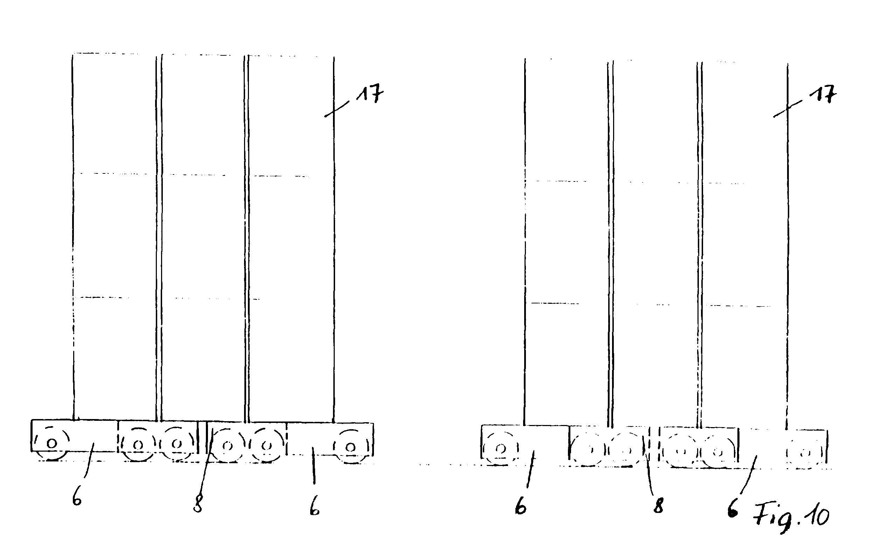

Die Fahrwerke mit verlängertem Achsstand und zwei verschiedenen Breiten für zwei Schienen unterschiedlicher Spurbreite lassen sich auch vorteilhaft für Lagereinheiten mit senkrechtem Aufbau 17 einsetzen, wie dies in Figur 10 dargestellt ist. Auch in diesem Fall ist die Gefahr des Kippens der Lagereinheiten wesentlich vermindert. Die Lagereinheiten können Aufbauten innerhalb der zulässigen Grenzwerte des Verhältnisses der Höhe der Lagereinheiten zum Abstand der Achsen voneinander aufweisen. Sie können auch aufgrund der Ausbildung der Fahrwerke derart zusammengeschoben werden, daß die Aufbauten unmittelbar aneinander grenzen, wie dies in Figur 10 erkennbar ist.

Bei der Ausführungsform nach Fig. 5 sind unter den Rollen der Fahrwerke Gegenrollen angebracht, die in die Schienen von unten eingreifen, um ein Kippen der L-förmig gestalteten Lagereinheiten 1 zu verhindern.

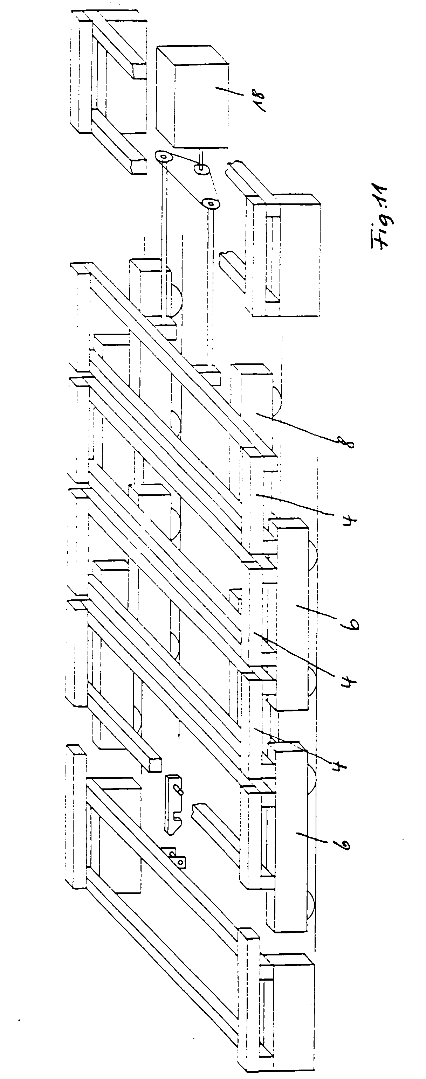

In Fig. 11 ist perspektivisch im Prinzip dargestellt, wie die Fahrwerke 6 größerer Spurbreite und die Fahrwerke 8 kleinerer Spurbreite ineinandergreifen. Die Auflageflächen 4 haben bei diesem Ausführungsbeispiel für alle Fahrwerke die gleiche Breite. Auf der rechten Seite der Anordnung der Fahrwerke 6, 8 ist ein Motor 18 vorgesehen, der die am weitesten rechts liegende verfahrbare Lagereinheit antreibt.

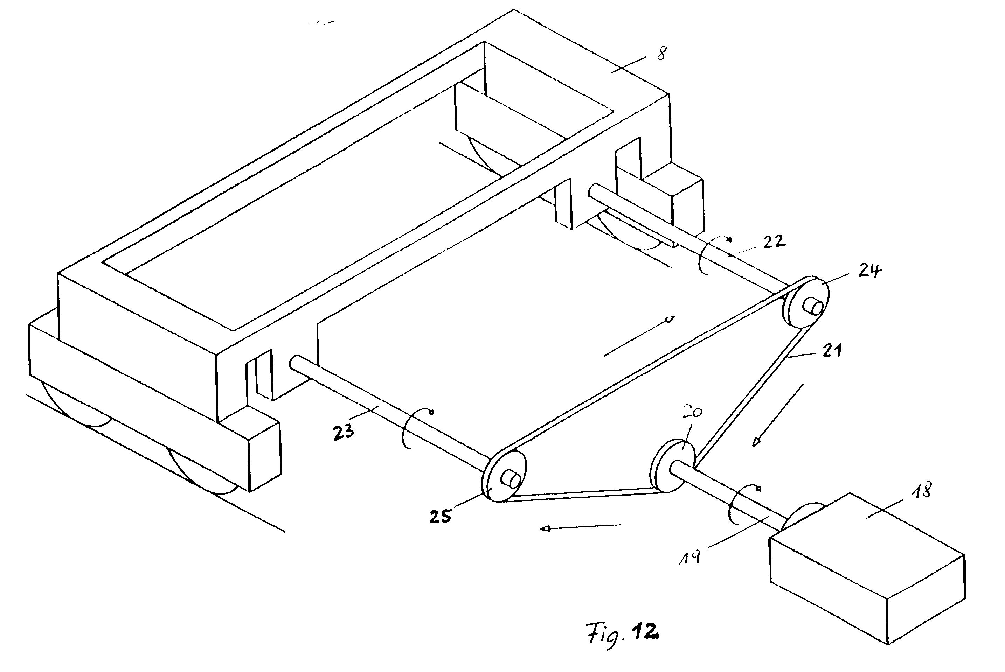

Fig. 12 zeigt einen Spindelparallelantrieb, wie er bei der Lageranlage nach Fig. 11 auf deren rechter Seite zwischen Motor 18 und Fahrwerk 8 der angrenzenden Lagereinheit vorgesehen ist. Der Motor 18 treibt eine Spindel 19 an, entweder in der einen oder in der anderen Richtung. Am Ende der Spindel befindet sich eine Riemenscheibe 20, die ebenso einen Riemen 21 in der einen oder der anderen Richtung antreibt. Der Riemen 21 greift in zwei auf zwei Fahrwerkantriebsspindeln 22, 23 sitzenden Riemenscheiben 24, 25 ein. Die mit einem Gewinde versehenen Fahrwerkantriebspindeln verschieben das Fahrwerk bei ihrer Drehung. Durch diesen Spindelparallelantrieb ist ein gleichmäßiges gutes Verfahren sichergestellt. Der Vortrieb kann sehr fein erfolgen.

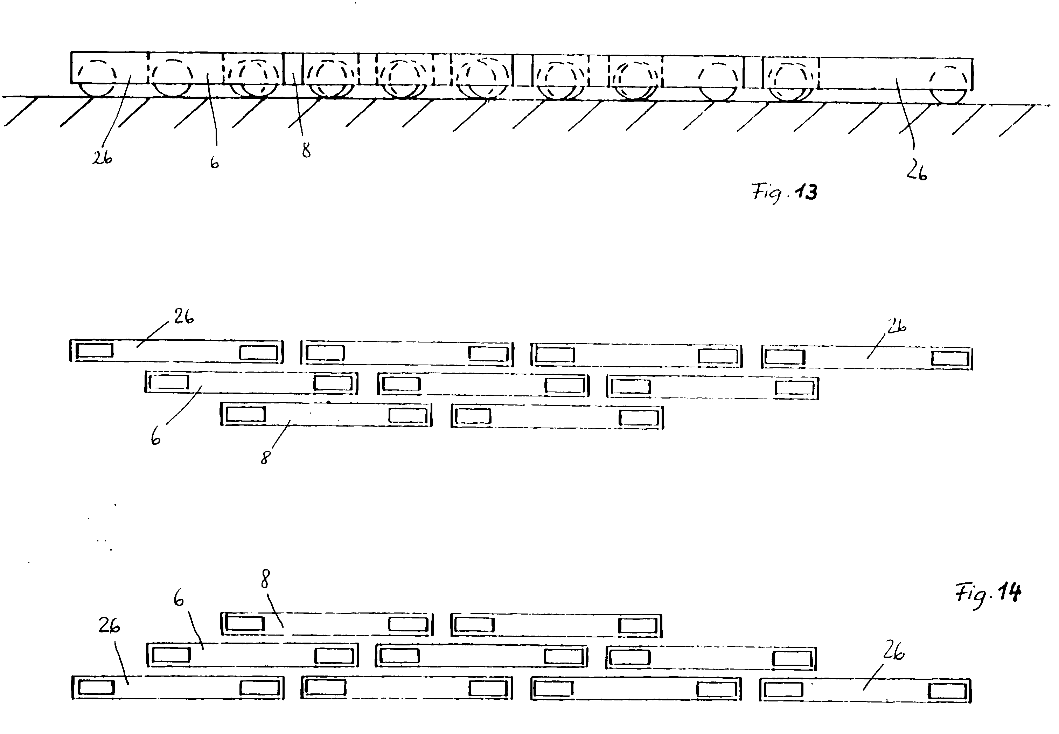

Die ineinandergreifenden Fahrwerke nach Fig. 13 haben drei verschiedene Spurbreiten und ermöglichen trotz eines stark verlängerten Achsabstands zur sicheren Führung der Lagereinheiten ein Zusammenschieben bis auf einen sehr geringen Abstand.

Die drei verschiedenen Spurbreiten des Fahrwerks sind gut anhand der Fig. 14 erkennbar. Die Fahrwerke verschiedener Spurbreiten laufen auf Schienen dreier verschiedener Spurbreiten. Im zusammengeschobenen Zustand grenzen jeweils zwei Fahrwerke gleicher Spurbreite aneinander. Bei Verwendung von Fahrwerken mit drei verschiedenen Spurbreiten läßt sich die Anzahl der Lagereinheiten pro Längeneinheit der Schiene verdreifachen oder die Länge der Fahrgestelle läßt sich bei gleicher Lagerdichte auf das 1,5-fache verlängern.

## Patentansprüche

1. Lageranlage mit einer Anzahl von geführten, durch eine Antriebsvorrichtung verfahrbaren Lagereinheiten, bei der durch Verfahren von Lagereinheiten ein Durchgang zwischen jeweils zwei Lagereinheiten zum Be- und Entladen einstellbar ist, wobei die Antriebsvorrichtung nur eine der verfahrbaren Lagereinheiten antreibt, und mit jeweils einer zwischen benachbarten Lagereinheiten vorhandenen lösbaren Kupplungsvorrichtung,
**dadurch gekennzeichnet,**
daß die Lagereinheiten (1) Fahrwerke (6 bzw. 8) aufweisen, deren Achsen in Verfahrrichtung außerhalb der zur Lagerung vorgesehenen Grundfläche liegen und daß die Fahrwerke (6 bzw. 8) nebeneinanderliegender Lagereinheiten zwei verschiedene Spurbreiten aufweisen, wobei das Fahrwerk (8) kleinerer Spurbreite zwischen die Räder des Fahrwerkes (6) größerer Spurbreite verfahrbar ist.

2. Lageranlage nach Anspruch 1,
**dadurch gekennzeichnet,**
daß die Lagereinheiten (1) eine gegenüber der Senkrechten geneigte Anlegewand (5) aufweisen, die auf einem Fahrwerk (6 bzw. 8) befestigt ist, dessen Radachsen sich außerhalb der Außenabmessungen der Anlegewand befinden.

3. Lageranlage nach Anspruch 1 oder 2,
**dadurch gekennzeichnet,**
daß die Fahrwerke (6,8,26) mit drei verschiedenen Spurbreiten versehen sind, und daß die Fahrwerke auf Schienen dreier verschiedener Spurbreiten laufen und ineinander verschachtelbar sind.

4. Lageranlage nach Anspruch 1, 2 oder 3,
**dadurch gekennzeichnet,**
daß die Radachsen der Fahrwerke außerhalb des Schwerpunktes der Lagereinheiten (1) liegen.

5. Lageranlage nach einem der vorhergehenden Ansprüche,
**dadurch gekennzeichnet,**
daß lösbare Kupplungsvorrichtungen (10) auf jeder Seite der Fahrwerke (6,8; 6,8,26) derart ausgebildet sind, daß beim Verschieben einer verfahrbaren Lagereinheit (1), die auf der jeweils anderen Seite der Lagereinheit (1 oder 9) vorhandene Kupplung einrastbar ist.

6. Lageranlage nach Anspruch 5,
**dadurch gekennzeichnet,**
daß jeder Kupplungsvorrichtung (10) im Ruhezustand der Lagereinheiten an einer festen Position im Boden der Lageranlage eine Entriegelungsvorrichtung (14) gegenüberliegt, die wahlweise zur Entriegelung ansteuerbar ist.

7. Lageranlage nach Anspruch 11,
**dadurch gekennzeichnet,**
daß jede Kupplung (10) zwischen den Lagereinheiten (1) eine Hebevorrichtung (14) zur wahlweisen Entriegelung der einrastbaren Riegel (11) aufweist.

## Claims

1. Storage plant with a number of guided storage units movable by means of a driving device, in which plant, by moving storage units, a passage may be set between respectively two storage units for loading and unloading, the driving device only driving one of the movable storage units, and with respectively one detachable coupling device between adjacent storage units,
**characterised in that**
the storage units (1) have moving gear (6 or 8), the axes of which in the direction of travel lie outside the ground area provided for storage, and in that the sets of running gear (6 or 8) of adjacent storage units have two different track widths, the moving gear (8) with the smaller track width being able to be moved between the wheels of the moving gear (6) with the greater track width.

2. Storage plant according to claim 1,
**characterised in that**
the storage units (1) have a bearing wall (5), inclined in relation to the vertical and fastened to the moving gear (6 or 8), the wheel axes of which are located outside the outer dimensions of the bearing wall.

3. Storage plant according to claim 1 or 2,
**characterised in that**
the sets of moving gear (6,8,26) are provided with three different track widths and in that the sets of moving gear run on tracks of three different track widths and may nest inside one another.

4. Storage plant according to claim 1, 2 or 3,
**characterised in that**
the wheel axes of the moving gear lie outside the centre of gravity of the storage units.

5. Storage plant according to one of the previous claims,
**characterised in that**
detachable coupling devices (10) are configured on each side of the moving gear (6,8; 6,8,26) in such a manner that, when one movable storage unit (1) is displaced, the coupling present on the respectively other side of the storage unit (1 or 9) may be engaged.

6. Storage plant according to claim 5,
**characterised in that**
opposite each coupling device (10) lies an unlocking device, in the rest state of the storage units, at a fixed position in the floor of the storage plant, which device may be optionally triggered for unlocking.

7. Storage plant according to claim 11,
**characterised in that**
each coupling (10) between the storage units (1) has a lifting device (14) to optionally unlock the engageable locking bar (11).

## Revendications

1. Installation de stockage comportant une pluralité d'unités de stockage guidées, déplaçables au moyen d'un dispositif d'entraînement, pour laquelle, par un déplacement des unités de stockage, un passage peut être réglé entre chaque paire d'unités de stockage pour procéder au chargement et au déchargement, le dispositif d'entraînement n'entraînant qu'une des unités de stockage déplaçables, et avec chaque fois un dispositif d'accouplement désolidarisable prévu entre des unités de stockage voisines, caractérisée en ce que
les unités de stockage (1) présentent des trains de roulement (6 ou 8) dont les axes sont situés dans la direction de déplacement hors de la surface de base prévue pour le stockage, et en ce que les trains de roulement (6 ou 8) de deux unités de stockage situées l'une à côté de l'autre présentent deux largeurs de voie différentes, le train de roulement (8) ayant la plus petite largeur de voie étant déplaçable entre les roues du train de roulement (6) ayant la plus grande largeur de voie.

2. Installation de stockage selon la revendication 1, caractérisée en ce que les unités de stockage (1) présentent une paroi d'appui (5) inclinée par rapport à la verticale, paroi fixée sur un train de roulement (6 ou 8), dont les axes de roues sont situés à l'extérieur des dimensions extérieures de la paroi d'appui.

3. Installation de stockage selon la revendication 1 ou 2, caractérisée en ce que les trains de roulement (6, 8, 26) sont dotés de trois largeurs de voie différentes, et en ce que les trains de roulement se déplacent sur des rails ayant trois largeurs de voie différentes et sont imbriquables les uns dans les autres.

4. Installation de stockage selon la revendication 1, 2 ou 3, caractérisée en ce que les axes de roues des trains de roulement sont situés à l'extérieur du centre de gravité des unités de stockage (1).

5. Installation de stockage selon l'une des revendications précédentes, caractérisée en ce que des dispositifs d'accouplement (10) désolidarisables sont réalisés sur chaque côté des trains de roulement (6, 8; 6, 8, 26), de manière que lors du déplacement d'une unité de stockage (1) déplaçable, l'accouplement prévu chaque fois sur l'autre côté de l'unité de stockage (1 ou 9) soit encliquetable.

6. Installation de stockage selon la revendication 5, caractérisée en ce qu'en face de chaque dispositif d'accouplement (10), lorsque les unités de stockage sont à l'état de repos, un dispositif de déverrouillage (14) est placé à l'opposé en une position fixe dans le sol de l'installation de stockage, pouvant être commandé à volonté pour procéder au déverrouillage.

7. Installation de stockage selon la revendication 1, caractérisée en ce que chaque accouplement (10) présente, entre les unités de stockage (1), un dispositif de levage (14) pour déverrouiller à volonté les verrous (11) encliquetables.
